Europäisches Patentamt

European Patent Office

Office européen des brevets

(19)

(11) Veröffentlichungsnummer: **0 399 404**
A2

(12) **EUROPÄISCHE PATENTANMELDUNG**

(21) Anmeldenummer: 90109487.0

(22) Anmeldetag: 18.05.90

(51) Int. Cl.5: **B01D 53/34**

(30) Priorität: 20.05.89 DE 3916522

(43) Veröffentlichungstag der Anmeldung:
28.11.90 Patentblatt 90/48

(84) Benannte Vertragsstaaten:
AT BE CH DE ES FR GB IT LI NL SE

(71) Anmelder: **SKW TROSTBERG AKTIENGESELLSCHAFT**
**Dr.-Albert-Frank-Strasse 32**
**D-8223 Trostberg(DE)**

(72) Erfinder: **Hirt, Hans-Dieter**
**Rotdornweg 12**
**D-2806 Oyten 1(DE)**
Erfinder: **Reinemann, Peter, Dr.**
**Windmühlenweg 14**
**D-2808 Syke/Ristedt(DE)**

(74) Vertreter: **Huber, Bernhard, Dipl.-Chem. et al**
**Möhlstrasse 22 Postfach 860 820**
**D-8000 München 86(DE)**

(54) Verfahren zur Reduzierung von SO2- und/oder NOX-Emissionen bei Verbrennungsprozessen.

(57) Zur Reduzierung von $SO_2$- oder/und $NO_x$-Emissionen bei Verbrennungsprozessen durch Zusatz von hydratisiertem Kalkstickstoff bläst man aus einer Mischdüse von einem Hydratmantel umhüllte hydratisierte Kalkstickstoffpartikel mit Hilfe eines Trägermediums aus Luft, Wasser und Wasserdampf in Form einer Tröpfchen-Pulver-Wirbelschicht in den Brennraum ein.

EP 0 399 404 A2

**Verfahren zur Reduzierung von SO₂- und/oder NO$_x$-Emissionen bei Verbrennungsprozessen**

Ein Verfahren zur Reduzierung von SO₂- und/oder NO$_x$-Emission bei Verbrennungsprozessen durch Zugabe eines Additivs auf Basis von hydratisiertem Kalkstickstoff, gegebenenfalls im Gemisch mit weiteren reaktiven Calciumverbindungen in der Brennkammer wird in der älteren, nicht vorveröffentlichten DE-A-38 23 848.9 beschrieben.

In der DE-OS 29 26 107 wird ein Verfahren zur Abscheidung von Stickstoffoxiden und gegebenenfalls Halogenen, Schwefel- und/oder Halogenverbindungen aus Gasen beschrieben, wobei die Gase in Anwesenheit von Wasser über ein Cyanamid geleitet oder durch eine Suspension oder Lösung des Cyanamids bei 0 bis 80 °C geleitet und die Schadstoffe abgeschieden werden. Aufgrund des hohen apparativen Aufwandes konnte sich dieses Verfahren in der Technik nicht durchsetzen.

Auch Verfahren, die Harnstoff und Kalk zur nichtkatalytischen Entfernung von NO$_x$- oder SO₂-Emissionen empfehlen, wurden bekannt.

All diesen Verfahren haften jedoch technische Mängel an. Der Erfindung liegt daher die Aufgabe zugrunde, ein Verfahren der genannten Art zu schaffen, das lediglich einen geringen technischen Aufwand erfordert und einen hohen Prozentsatz an entfernten Schadstoffen erreichen läßt.

Gelöst wird diese Aufgabe durch ein Verfahren zur Reduzierung von SO₂- oder/und NO$_x$-Emissionen bei Verbrennungsprozessen durch Zusatz von hydratisiertem Kalkstickstoff, das dadurch gekennzeichnet ist, daß man aus einer Mischdüse von einem Hydratmantel umhüllte hydrati sierte Kalkstickstoffpartikel mit Hilfe eines Trägermediums aus Luft, Wasser und Wasserdampf in Form einer Tröpfchen-Pulver-Wirbelschicht in den Brennraum einbläst.

Die Erfindung beruht auf der Feststellung, daß hydratisierter Kalkstickstoff als Additiv zur Reduzierung saurer Schadstoffe aus Verbrennungsvorgängen eine optimale Reaktivität dann erreicht, wenn man von einem Hydratmantel umhüllte Partikel von hydratisiertem Kalkstickstoff mit Hilfe eines bestimmten Trägermediums über eine Mischdüse in feindisperser Form gleichmäßig verteilt in den Brennraum einbringt.

Mit dem erfindungsgemäßen Verfahren erreicht man eine besonders hohe Schwefel- und Stickoxidreduzierung. Vorzugsweise bläst man das Additiv mit einem Träger- und Treibgasmedium aus Luft, Wasserdampf und Wasser über eine variierbare Mischdüse bekannter Bauart ein. Hierbei ist von besonderer Wichtigkeit, daß sich die einzelnen Teilchen des hydratisierten Kalkstickstoffs während der Förderung mit einer praktisch geschlossenen Hydrathülle überziehen, wozu lediglich Zusatz einer entsprechenden Wassermenge zum Träger-Treibgasmedium notwendig ist. Alternativ können aber auch bereits vollständig oder teilweise wasserummantelte Teilchen eingesetzt und mit dem Trägermedium gemischt werden. Die derart wasserummantelten Teilchen bilden nach Verlassen der Düse im Brennraum eine Tröpfchen-Pulver-Wirbelschicht. Hier werden sie explosionsartig dehydratisiert, was eine Zerteilung der Partikel des hydratisierten Kalkstickstoffs bewirkt, wobei eine um das 10- bis 1000-fach größere, wirksame Partikeloberfläche entsteht.

Maßgeblich bei dieser Dispergierung über eine thermische Explosion ist, daß sich die Partikel nicht in einer durch die Düse vorgegebenen linearen Ausdehnung bewegen sondern umfassend und gleichmäßig im Brennraum verteilt werden. Hierzu wird als Trägermedium für das Additiv neben Luft und Wasser als Wasserdampf bevorzugt Sattdampf oder überhitzter Wasserdampf eingesetzt. Dessen Verhältnis zum mitverwendeten Wasser beträgt vorzugsweise 10:1 bis 1:10; der Druck liegt bevorzugt im Bereich von 3 bis 10 bar.

Die Menge an hydratisiertem Kalkstickstoff und Trägermedium kann je nach den Brennraumbedingungen und der Abgaszusammensetzung variiert und durch wenige einfache Vorversuche optimal eingestellt werden. Im allgemeinen haben sich Kalkstickstoffmengen von 0,5 bis 10 g/Nm³ Abgas, vorzugsweise von 1 bis 5 g/Nm³ bewährt. Die Partikelgröße liegt vorzugsweise bei < 250 μm, besonders bevorzugt < 160 μm bis hinab zu 10 μm.

Mit dem erfindungsgemäßen Verfahren wird eine Reduzierung der SO₂- oder/und NO$_x$-Bestandteile der Abgase bereits ab 300 °C erreicht. Das Verfahren kann bis zu Brennraumtemperatur von 1200 °C angewendet werden.

Zur näheren Erläuterung der Erfindung seien nachfolgende Beispiele aufgeführt:

**Beispiel 1**

In einer Sondermüllverbrennung für Gemische organischer Lösungsmittel mit Schweröl-Stützfeuerung entsteht eine Rauchgasmenge von 15000 Nm³/h. Der Sauerstoffgehalt im Abgas beträgt 9 %, der NO$_x$-Gehalt 736 mg/Nm³. Hydratisierter Kalkstickstoff (Teilchengröße 90 % < 160 μm) wird in einer Menge von 75 kg/h mit Trägerluft, Sattdampf und Wasser in den Feuerraum eingeblasen. Der NO$_x$-Gehalt im Abgas wird auf 175 mg/Nm³ reduziert, was einem Entstickungsgrad von ca. 76 % entspricht.

## Beispiel 2

In einem rostgefeuerten Feststoffkessel zur Verbrennung organischer Rückstände aus der Papierfabrikation wird ein Rauchgasvolumenstrom von 17.800 $Nm^3$/h erzeugt. Der Sauerstoffgehalt beträgt ca. 6,5 % im Abgas, der $NO_x$-Gehalt 475 mg/$Nm^3$, der $SO_2$-Gehalt 2450 mg/$Nm^3$. Hydratisierter Kalkstickstoff (Teilchengröße 90 % < 160 $\mu$m) wird in einer Menge von 60 kg/h mit Trägerluft, Sattdampf und Wasser in den Feuerraum eingeblasen. Der $NO_x$-Gehalt im Abgas wird auf 70 mg/$Nm^3$, der $SO_2$-Gehalt auf 1950 mg/$Nm^3$ reduziert, was einem Entstickungsgrad von etwa 85 % und einem Entschwefelungsgrad von etwa 20 % entspricht.

## Beispiel 3

In einem braunkohlebefeuerten Kessel werden bei einer Verbrennung von 12 t Braunkohle pro Stunde ca. 89600 $Nm^3$/h Abgas mit einem $NO_x$-Gehalt von 265 mg/$Nm^3$ erzeugt.

Hydratisierter Kalkstickstoff (Teilchengröße 90 % < 160 $\mu$m) wird in einer Menge von 200 kg/h mit Trägerluft, Sattdampf und Wasser in den Feuerraum eingeblasen. Der $NO_x$-Gehalt im Abgas wird auf 90 mg/$Nm^3$ reduziert, was einem Entstickungsgrad von ca. 66 % entspricht.

## Ansprüche

1. Verfahren zur Reduzierung von $SO_2$- oder/und $NO_x$-Emissionen bei Verbrennungsprozessen durch Zusatz von hydratisiertem Kalkstickstoff, **dadurch gekennzeichnet**, daß man aus einer Mischdüse von einem Hydratmantel umhüllte hydratisierte Kalkstickstoffpartikel mit Hilfe eines Trägermediums aus Luft, Wasser und Wasserdampf in Form einer Tröpfchen-Pulver-Wirbelschicht in den Brennraum einbläst.

2. Verfahren nach Anspruch 1, **dadurch gekennzeichnet**, daß man als Trägermedium Luft in Mischung mit Wasserdampf verwendet.

3. Verfahren nach Anspruch 2, **dadurch gekennzeichnet**, daß man als Trägermedium für die hydratisierten Kalkstickstoffpartikel eine Mischung aus Sattdampf und Wasser, vorzugsweise im Verhältnis von 10:1 bis 1:10 und bei Drucken von 3 bis 10 bar zusammen mit Luft verwendet.

4. Verfahren nach einem der Ansprüche 1 bis 3, **dadurch gekennzeichnet**, daß man das Additiv in einem Temperaturbereich von 300 bis 1200 °C einsetzt.

5. Verfahren nach einem der vorhergehenden Ansprüche, **dadurch gekennzeichnet**, daß man hydratisierte Kalkstickstoffpartikel verwendet und dem Trägermedium eine solche Wassermenge zusetzt die ausreicht, um zusätzlich einen Hydratmantel auf den Partikeln auszubilden, bevor diese in den Brennraum eintreten.

6. Verfahren nach einem der Ansprüche 1 bis 4, **dadurch gekennzeichnet**, daß man bereits mit einem Hydratmantel umhüllte hydratisierte Kalkstickstoffpartikel mit dem Trägermedium zusammenbringt.

7. Verfahren nach einem der vorhergehenden Ansprüche, **dadurch gekennzeichnet**, daß man Kalkstickstoffpartikel mit < 250 $\mu$m, vorzugsweise < 160 $\mu$m, verwendet.

8. Verfahren nach einem der vorhergehenden Ansprüche, **dadurch gekennzeichnet**, daß man 0,5 bis 10 g Kalkstickstoff pro $Nm^3$ Abgas einsetzt.